# EUROPÄISCHE PATENTSCHRIFT

(11) **EP 1 080 985 B1**
(45) Veröffentlichungstag und Bekanntmachung des Hinweises auf die Patenterteilung: **05.07.2006**
(21) Anmeldenummer: 00118811.9
(22) Anmeldetag: 31.08.2000
(51) Int. Cl.: B60N 2/46, A47C 1/03, A47C 7/54

(54) **Armlehne für einen Fahrzeugsitz**
Vehicle seat arm-rest
Accoudoir pour siège de véhicule

(30) Priorität: 02.09.1999 DE 19941737
(43) Veröffentlichungstag der Anmeldung: 07.03.2001
(73) Patentinhaber: Hübner, Reinhard, 42477 Radevormwald (DE); Rüsing, Arnold, 42477 Radevormwald (DE)
(72) Erfinder: Hübner, Reinhard, 42477 Radevormwald (DE); Rüsing, Arnold, 42477 Radevormwald (DE)
(74) Vertreter: Eichelbaum, Lambert

(56) Entgegenhaltungen:
- DE-A- 3 344 707
- DE-A- 3 940 895
- DE-A- 4 437 244
- DE-A- 19 704 469
- US-A- 5 702 157

## Beschreibung

Die Erfindung betrifft eine Armlehne für einen Fahrzeugsitz, die mit ihrem einen als Scheibe ausgebildeten Ende um einen in einem Gehäuse angeordneten Lagerzapfen nach Lösen einer Arretierungsvorrichtung durch Anheben ihres anderen Endes in Richtung auf die Rückenlehne, mit dem Ende dann in Richtung auf die Sitzfläche in eine Loslage und von dort durch erneutes Anheben in Richtung auf die Rückenlehne des Fahrzeugsitzes um einen bestimmten Schwenkwinkel zwischen zwei Anschlagkanten in eine arretierte Gebrauchslage verschwenkbar ist.

Bei einer durch offenkundige Benutzung bekannt gewordenen Armlehne dieser Art besteht die Arretierungsvorrichtung aus einem schwenkbaren Rastnocken, der an einem Lagerstift schwenkbar auf der Scheibe angeordnet und in der Gebrauchslage sich mit einem Vorsprung an einer ersten Anschlagkante des Gehäuses abstützt. Beim Anheben ihres anderen Endes der Armlehne fällt der Rastnocken unter seiner Schwerkraft gegen die zweite Anschlagkante, die vom freien Schenkel einer in einem Rücksprung der Scheibe gehalterten Blattfeder gebildet ist. Von dieser wird der Rastnocken in der Loslage gehalten und beim erneuten Hochschwenken der Armlehne wiederum vor die erste Anschlagkante des Gehäuses in die Gebrauchslage der Armlehne gedrückt. Da die Rastfeder nur in der Loslage auf den Rastnocken einwirkt, ist ein Überlastungsschutz nicht gewährleistet. Dies führt dazu, daß bei Belastung der Armlehne durch eine darauf sitzende Person der Rastnocken oder die Anschlagkante des Gehäuses abbrechen können und damit die Armlehne unbrauchbar wird. Außerdem erfordert diese Ausführungsform eine teure Aluminium-Druckgußherstellung sowohl der Armlehne als auch des Gehäuses. Und schließlich muß der Rastnocken aus gestanztem Stahl und die U-förmige Blattfeder aus Federstahl hergestellt werden.

Eine weitere mit einem Rastnocken arbeitende Armlehne der eingangs genannten Art ist in der DE 33 44 707 A1 offenbart. Bei dieser Ausführungsform ist die Armlehne mittels einer Schwenkachse mit einem ortsfesten Scheibenabschnitt des Gehäuses verbunden. Der Scheibenabschnitt weist zwei Rastausnehmungen auf, von denen die erste dann mit einem Rastnocken zusammenwirkt, wenn sich die Armlehne in Gebrauchsposition befindet. Die zweite Rastausnehmung wird wirksam, wenn sich die Lehne in heruntergeklappter Nicht-Gebrauchsstellung befindet. Um von der ersten Rastausnehmung zur zweiten Rastausnehmung zu gelangen, muß eine unter Wirkung einer Feder stehende Sperrklinke eine erste Totpunktlage erreichen. Bei Überschreiten dieser ersten Totpunktlage geht die Feder in ihre zweite Totpunktlage über, wodurch infolge der auf die Sperrklinke ausgeübten Kraft, diese an einem von einer Konsole abragenden Anschlag anliegt, der zur Unterbindung von Geräuschen mit einem Dämpfungsglied versehen ist. Hiernach kann die Armlehne ungehindert nach unten verschwenkt werden, bis sie die zweite Rastausnehmung erreicht. Bei einem weiteren Abwärtsschwenken der Armlehne bewegt sich die Sperrklinke unter Überwindung der zweiten Totpunktlage der Feder in die zweite Rastausnehmung hinein. Durch eine Überführung der Armlehne in ihre Betriebsstellung wird sie hochgeschwenkt, wodurch die Sperrklinke federnd am Rand des Scheibenabschnittes entlanggleitet, bis sie die erste Totpunktlage der Feder erreicht und dadurch verriegelnd in die erste Rastausnehmung eingreift. Durch ihre Totpunktlagen entstehen indifferente Lagen der Armlehne sowie eine erhebliche Beanspruchung der Feder. Sollte dabei, beispielsweise durch eine sich auf die Armlehne setzende Person die Feder auf Block gefahren werden, wird unweigerlich der unter der Wirkung der Feder stehende Stift, der mit dem Rastnocken zusammenwirkt, ab- oder ausbrechen, wodurch die Armlehne funktionsunfähig wird. Aber auch ein "Auf Block-Fahren" der Feder beeinträchtigt ihre Funktion erheblich. Eine sichere Schließstellung kann dann nicht mehr gewährleistet werden. Ein Überlastungsschutz ist nicht vorhanden.

Bei einer zweiten durch offenkundige Benutzung bekannt gewordenen Ausführungsform der Armlehne der eingangs genannten Art besteht die Arretierungsvorrichtung aus einem um einen ortsfesten Stift im Gehäuse schwenkbaren Kulissenstein, der an seinen beiden schmalen Stirnseiten mit V-förmigen Rücksprüngen versehen ist, in welche entsprechend vorspringende Anschlagkanten der Scheibe der Armlehne eingreifen. Um die Armlehne aus ihrer Gebrauchslage in ihre Loslage zu überführen, gleitet bei ihrem Anheben in Richtung auf die Rückenlehne die erste Anschlagkante der Scheibe aus dem V-förmigen Rücksprung des Kulissensteines, der sodann beim weiteren Anheben von der zweiten Anschlagkante an der Scheibe aus der kreisförmigen Schwenkbahn der ersten Anschlagkante der Scheibe herausgeschwenkt wird, wodurch die Armlehne vollständig in Richtung auf die Sitzfläche in ihre Loslage heruntergeschwenkt werden kann. Beim erneuten Anheben der Armlehne wird der Kulissenstein von der zweiten Anschlagkante in eine Eingriffslage mit der ersten Anschlagkante der Scheibe herumgeschwenkt, so daß beim nachfolgenden, erneuten Herunterschwenken der Armlehne in Richtung auf den Sitz die erste Anschlagkante in den anderen V-förmigen Rücksprung eingreifen und eine erneute sichere Arretierungs- und damit Gebrauchslage der Armlehne gewährleistet werden kann. Diese Armlehne weist gleichfalls keinen Überlastungsschutz auf und erfordert zur Verstärkung des aus Kunststoff bestehenden Mittelteiles der Scheibe an beiden Außenseiten entsprechend stabile und profilierte Einlagebleche aus Stahl.

Eine weitere Armlehne der eingangs genannten Art ist in der DE 44 37 244 A1 offenbart. Im Gegensatz zu den bisher beschriebenen Ausführungsformen mit einer Scheibenverbindung ist bei dieser die Armlehne mit dem Sitz zwar auch durch einen Drehzapfen verbunden, jedoch wird nunmehr die Relativbewegung zwischen Armlehne und Sitz durch einen Steuerhebel in Verbindung mit einer herzförmigen Schaltkulisse bewirkt. Derartige Herzkurvensteuerungen sind beispielsweise bei den sog. Push/Push-Systeme von Aschenbechern und Ablagefächern in der Automobilindustrie bekannt. Im vorliegenden Fall ist der Steuerhebel über einen ersten Achszapfen mit dem Sitz verbunden und greift über einen Steuerzapfen am anderen Ende in die herzförmige Schaltkulisse ein. Diese Schaltkulisse weist eine Umrandung mit einem Inselbereich auf. Die Verriegelungsstellung des Steuerzapfens wird in der V-, bzw. U-förmigen Senke der herzförmigen Kulisse erreicht. Diese Position kennzeichnet die Betriebslage der Armlehne. Um die Armlehne aus dieser Betriebsstellung zu lösen, muß sie zunächst auch hier nach oben in Richtung auf den Rücksitz verschwenkt werden, bis der Steuerzapfen die Spitze der herzförmigen Schaltkulisse umrundet hat und sodann nach unten gefahren werden kann. Nach nochmaligem Anheben gelangt der Steuerzapfen in eine untere Anschlaglage und von dort zurück in seine Verriegelungsstellung, d. h. in Anlage an den vorbeschriebenen U-, bzw. V-förmigen Einschnitt der herzförmigen Kulisse. Diese Armlehne ist mit dem Nachteil behaftet, daß bereits beim Aufschlagen mit einer Hand auf die Armlehne die linke Spitze der herzförmigen Schaltkulisse abbrechen und dann keine Verriegelungslage der Armlehne mehr sichergestellt werden kann. Bei jedweder Überlastungskraft, sei es durch Abstützen mit dem gesamten Oberkörper auf der Armlehne oder gar beim Setzen mit vollem Körpergewicht auf die Armlehne, erfolgt das Abbrechen dieser Spitze der herzförmigen Schaltkulisse mit der Folge, daß entweder die gesamte Armlehne oder zumindest die Schaltkulisse gegen eine neue ausgetauscht werden muß. Ein Überlastungsschutz ist bei dieser Ausführungsform nicht möglich.

Und schließlich ist aus der DE 39 40 895 A1 eine gattungsfremde Armlehne bekannt geworden, bei welcher eine ortsfest um einen Lagerstift im Gehäuse schwenkbar angeordnete sowie unter Wirkung einer Biegefeder stehende Sperrklinke in eine Außenverzahnung des als Scheibe ausgebildeten Endes der Armlehne in der Gebrauchslage eingreift und beim Anheben der Armlehne entgegen der Kraft einer Rückholfeder über eine schräge Auflauffläche an der Scheibe aus der Verzahnung heraus auf eine kreissegmentartige Fläche der Scheibe hinaufgleitet. Diese Ausführungsform ist mit dem Nachteil behaftet, daß einerseits kein Überlastungsschutz der Armlehne vorhanden ist und andererseits sowohl das Anheben der Armlehne in die Loslage als auch ihr Herunterschwenken in ihre Gebrauchslage stets entgegen einer sich vorspannenden Rückholfeder erfolgt. Dies erfordert zumindest beim Anheben der Armlehne in die Loslage zusätzliche, unter Umständen nicht unerhebliche Kräfte der Bedienungsperson, was ergonomisch ungünstig ist. Schließlich weist diese Ausführungsform einen äußerst komplizierten Aufbau auf und ist auf kostspielige, metallische Werkstoffe beschränkt.

Von diesem Stand der Technik ausgehend, liegt der Erfindung die Aufgabe zugrunde, eine Armlehne der eingangs genannten Gattung zu schaffen, die mit einfachen baulichen Mitteln eine sichere Gebrauchslage wahlweise mit oder ohne Überlastungsschutz gewährleistet, eine stets störungsfreie reibungsarme Schaltung der Arretierungsvorrichtung zur Überführung der Armlehne von ihrer Gebrauchslage in ihre Loslage und umgekehrt sicherstellt sowie weitgehend aus Kunststoff hergestellt werden kann.

Diese Aufgabe wird in Verbindung mit dem eingangs genannten Gattungsbegriff erfindungsgemäß durch folgende Merkmale gelöst:
a) die Arretierungsvorrichtung besteht aus einem etwa radial zum Lagerzapfen in einer Zylinderöffnung beweglichen sowie unter Wirkung einer Rastfeder stehenden Stellkolben mit einer Queröffnung und einem darin verschieblichen Arretierungsschieber,
b) der Stellkolben ist an seinem von der Rastfeder abgewandten Ende mit einem Rastvorsprung versehen und greift unter Wirkung der Rastfeder mit diesem in einen Rastrücksprung ein,
c) der Arretierungsschieber ist in der Queröffnung des Stellkolbens zwischen den beiden Anschlagkanten des Schwenkwinkels von der ersten Anschlagkante in eine den Stellkolben entgegen der Wirkung der dann noch weiter vorgespannten Rastfeder in eine arretierende Feststellung zur Loslage der Armlehne und
d) von der zweiten Anschlagkante in die den Stellkolben zur Einwirkung der Rastfeder freigebende, zur Arretierung der Armlehne führende Gebrauchslage verschiebbar.

Durch diese Merkmale wird eine Armlehne geschaffen, bei welcher durch das Zusammenwirken des als Scheibe ausgebildeten Endes der Armlehne in Verbindung mit dem Stellkolben und dem Arretierungsschieber eine kompakte und sehr effiziente Arretierungsvorrichtung geschaffen wird, die gemäß dem Merkmal d) in der Gebrauchslage die Rastfeder zu ihrer Einwirkung auf den Stellkolben und damit auf dessen Rastvorsprung freigibt. Die Merkmale a), b) und c) gewährleisten eine Armlehne, die komplett - bis auf die Rastfeder und den Lagerzapfen - aus Kunststoff in preiswerter Serienherstellung hergestellt werden kann. Eine Wartung ist nicht erforderlich, da der Stellkolben innerhalb seines kurzen Verschiebeweges sowie der Arretierungsschieber stets auf Kunststoffflächen gleiten, die von Haus aus mit einem geringen Reibungskoeffizienten behaftet sind. Das gilt auch für den aus Metall bestehenden Lagerzapfen, weil dieser wiederum von einer Ringöffnung der aus Kunststoff bestehenden Scheibe der Armlehne umgriffen ist. Der Stellkolben und der Arretierungsschieber bilden einen reibungsarmen Gleitschalter mit hoher Festigkeit, so daß stets eine reibungsarme und störungsfreie Schaltung der Armlehne von ihrer Loslage in ihre Gebrauchslage und umgekehrt bewirkt werden kann.

In vorteilhafter Weiterbildung der Erfindung weist der Stellkolben eine quadratische oder rechteckige Außenquerschnittsform auf und ist an seinem der Feder zugekehrten Ende mit einem Rücksprung zu ihrer Aufnahme und an seinem entgegengesetzten Ende entweder zwischen zwei gabelförmigen Schenkeln mit einer drehbaren, in einen kreisabschnittsförmigen Rastrücksprung eingreifenden Rastrolle oder mit einem starren, formschlüssig in einen entsprechend formschlüssig ausgebildeten Rastrücksprung eingreifenden Rastvorsprung versehen. Bei der ersten Alternative mit der Rastrolle ist ein Überlastungsschutz gewährleistet, bei der zweiten Alternative hingegen nicht.

Um die Rastfeder zu entlasten bzw. schwächer ausbilden zu können, wird vorteilhaft die Drehachse der Rastrolle mit einer geringen Distanz oberhalb oder unterhalb der Kreisbahn angeordnet, in welcher der teilkreisartige, etwa dem Durchmesser der Rastrolle entsprechende Rastrücksprung eingebracht ist. Durch die quadratische oder rechteckige Außenquerschnittsform des Stellkolbens wird eine Verdrehsicherung geschaffen.

Der Arretierungsschieber besteht vorteilhaft aus einem in der Ansicht U-förmigen, ansonsten quaderförmigen Schieber, dessen U-Schenkel eine unterschiedliche Breite aufweisen. In Verbindung mit dem vorbeschriebenen Stellkolben bildet der Schieber mit der Scheibe eine äußerst kompakte und biegesteife Arretierungsvorrichtung, die sich nahezu über die gesamte Breite der Scheibe der Armlehne erstrecken kann. Dieser Arretierungsschieber ist in der Loslage des Stellkolbens keinen erwähnenswerten äußeren Kräften und in der Arretierungslage des Stellkolbens lediglich der Kraft der vorgespannten Rastfeder ausgesetzt. An der Aufnahme von über die Armlehne eingeleiteten Kräften nimmt der Arretierungsschieber nicht teil, sondern wird lediglich zwischen den beiden Endstellungen der Armlehne von den beiden Anschlagkanten reibungsarm verschoben. Er dient nur zur Sperrung oder Freigabe der Kraft der Rastfeder. Die Kraftübertragung erfolgt ansonsten direkt von der Scheibe auf den Stellkolben und dessen Rastvorsprung.

Die Stirnflächen der beiden Schenkel des Arretierungsschiebers bilden vorteilhaft Gleitflächen, mit denen sie auf einer Gegengleitfläche von den beiden Anschlagkanten verschiebbar sind.

Nach einer vorteilhaften Weiterbildung der Erfindung weist das Gehäuse, welches das als Scheibe ausgebildete Ende der Armlehne und den Lagerzapfen aufnimmt, einen die Scheibe beidseitig umgreifenden gabelförmigen Gehäusekörper auf, der an seinem geschlossenen Stegende von einer Rahmenstange der Rückenlehne gehalten ist. Dadurch sind sämtliche Teile der Arretierungsvorrichtung, nämlich der Stellkolben, der Arretierungsschieber und die Feder vollständig in dem Gehäuse gekapselt und somit einem nicht autorisierten Zugriff von außen und damit einer Fehlbedienung nicht zugänglich. Eine sichere Halterung des Gehäuses ist durch das äußerst kompakt und massiv ausgebildete Stegende und durch die stabile Rahmenstange der Rückenlehne ebenso wie eine einfache Anbringung gewährleistet.

Nach einer ersten vorteilhaften Ausführungsform der Erfindung stützt sich die Rastfeder mit ihrem einen Ende in einem Rücksprung des als Scheibe ausgebildeten Endes der Armlehne und mit ihrem anderen Ende in dem Rücksprung des Stellkolbens ab, der innerhalb derselben Ausnehmung in der Scheibe verschiebbar und mit seinem Rastvorsprung in einen Rastrücksprung des Gehäuses eingreift, wobei die erste und zweite Anschlagkante für den Arretierungsschieber an den Enden einer Teilkreisbahn innerhalb des Gehäuses und die Gleitflächen für den Arretierungsschieber in einer ebenen Ausnehmung auf der Scheibe der Armlehne angeordnet sind.

Diese Ausführungsform gewährleistet spritzgießtechnisch eine einfache Ausbildung des Gehäuses, des Arretierungsschiebers und des als Scheibe ausgebildeten Endes der Armlehne. Mechanisch weist diese Ausführungsform den Vorteil eines an einem großen Hebelarm relativ zum Lagerzapfen angeordneten Rastvorsprunges auf, der in einen im Gehäuse angeordneten Rastrücksprung eingreift.

Nach einer zweiten vorteilhaften Ausführungsform stützt sich in kinematischer Umkehrung der ersten Ausführungsform die Rastfeder mit ihrem einen Ende in einem Rücksprung im Gehäuse und mit ihrem anderen Ende in der Ausnehmung am rückwärtigen Ende des Stellkolbens ab, der innerhalb derselben Ausnehmung im Gehäuse verschiebbar und mit seinem Rastvorsprung in einen Rastrücksprung der Scheibe eingreift, wobei der Arretierungsschieber mit kreissegmentartigen Gleitflächen auf einer Kreisbahn des Gehäuses verschiebbar ist und die erste und zweite Anschlagkante als Vorsprünge an der Scheibe der Armlehne angeordnet sind.

Diese Ausführungsform weist zwar spritzgießtechnisch eine einfache Ausführungsform des als Scheibe ausgebildeten Endes der Armlehne sowie des Gehäuses auf, jedoch ist der Arretierungsschieber mit einer komplizierteren Form versehen. Mechanisch ist diese Ausführungsform gegenüber der ersten mit dem Nachteil eines kürzeren radialen Hebels des Rastvorsprunges in Verbindung mit dem Rastrücksprung in bezug auf den Lagerzapfen behaftet.

Welcher von diesen beiden alternativen Ausführungsformen der Vorzug zu geben ist, hängt sowohl von den baulichen Gegebenheiten als auch vom Verwendungszweck ab, also beispielsweise, ob diese Armlehne in einem Bus, einem PKW, einem Flugzeug, einer Eisenbahn oder Straßenbahn oder einem Stuhl oder Sessel im Haushalt Verwendung finden soll.

Die Wirkung der Rastfeder kann noch dadurch erhöht werden, daß der aus einer Rolle bestehende Rastvorsprung entweder aus einem entropieelastischen Rollenkörper besteht oder mit einem entropieelastischen, zylindrischen Mantel versehen ist oder aus Stahl besteht. Bei den beiden ersten alternativen Bauformen ergeben sich zwei Rastfedern in Hintereinanderschaltung, so daß eine Gesamtfederhärte ohne zusätzlichen Platzbedarf variantenreich gestaltet werden kann, weil in diesem Fall die entropieelastische Federhärte der Rolle als zusätzliche Rastfeder wirkt.

Zur Gewährleistung eines Überlastungsschutzes der Armlehne, z.B. dadurch, daß sie entgegen ihrem Bestimmungszweck als Sitz verwendet wird, ist die Rastfeder bzw. die Rastfedern bei eingerasteter Stellung des Rastvorsprunges mit einer solchen Federkraft vorgespannt, welche die Armlehne bei einer auf ihr freies Ende ausgeübten Druckkraft bis beispielsweise 5 kg in der Rastlage hält und erst bei Überschreiten dieser Druckkraft die Rastfeder unter Wirkung des zurückgleitenden Stellkolbens weiter zusammengepreßt wird, der Rastvorsprung aus dem Rastrücksprung in die Loslage der Armlehne herausrückt und letztere in Richtung auf den Sitz herunterschwenkt. Dadurch wird ein Abbrechen sowohl der Armlehne als auch der Arretierungsvorrichtung bei einem nicht bestimmungsgemäßen Gebrauch der Armlehne unterbunden.

Die angegebene Druckkraft von beispielsweise 5 kg ist deshalb als beispielhaft zu verstehen, da es im Belieben des Fachmannes steht, durch eine entsprechende Federvorspannung diese Druckkraft zu erhöhen oder zu verringern. Entscheidend ist, daß die Druckkraft einerseits so bemessen wird, daß eine stets sichere Auflage des Armes einer Person gewährleistet, ohne daß die Armlehne aus ihrer Arretierungslage ausrastet. Andererseits ist auch zu berücksichtigen, ob ein Kind oder ein Erwachsener die Armlehne entgegen ihrem bestimmungsgemäßen Gebrauch als Sitz verwendet. Würde beispielsweise die Druckkraft der Armlehne auf 30 kg erhöht werden, wäre es möglich, daß sich ein Kind darauf setzt und beim plötzlichen Ausrasten der Armlehne herunterfallen und in einen Unfall verwickelt werden kann. Um solche Unfälle auszuschließen, sollte die Druckkraft stets so bemessen werden, daß die Arretierungsvorrichtung bereits unter dem Gewicht eines Kindes aus der Arretierung ausrastet, ohne daß es überraschend herunterfällt und andererseits noch so groß bemessen ist, daß eine sichere Abstützung des Armes eines Erwachsenen sichergestellt ist. Eine solche Druckkraft liegt etwa zwischen 3 kg und 5 kg.

Die Rastfeder und der Lagerzapfen bestehen vorteilhaft aus Stahl, hingegen sämtliche anderen Teile aus einem schlagfesten und formstabilen Kunststoff.

Nach einer besonders vorteilhaften Weiterbildung der Erfindung sind das Gehäuse, die Armlehne und der Stellkolben aus Polyamid 6 (PA6) mit Glasfaserverstärkung oder aus Polybutylenterephtalat (PBTP) und der Arretierungsschieber aus Polyoxymethylen (POM) hergestellt. Das letztgenannte Material für den Arretierungsschieber erweist sich als besonders gleitfähig auf PA6 bzw. PBTP.

Mehrere Ausführungsbeispiele der Erfindung sind in den Zeichnungen dargestellt. Dabei zeigen:
Fig. 1 die Seitenansicht eines Sitzes mit der Armlehne bei entfernter Gehäuseseitenwand,
Fig. 2 die Schnittansicht durch das Ende der Armlehne von Fig. 1 mit ihrem als Scheibe ausgebildeten Ende, in welcher der Rücksprung für die Aufnahme der Rastfeder und des Stellkolbens sowie die Gleitfläche für den Arretierungsschieber vorgesehen sind, wohingegen in einer Teilkreisbahn des Gehäuses der Rastrücksprung mit einer darin eingreifenden Rolle des Stellkolbens in Gebrauchslage dargestellt ist,
Fig. 3 die Ansicht von Fig. 2 nach Anheben der Armlehne in Richtung auf die Rückenlehne, bei aus dem Rastrücksprung bereits ausgerückten Rastvorsprung und mit dem von der ersten Anschlagkante in seine den Stellkolben arretierenden Arretierungslage verschobenen Arretierungsschieber,
Fig. 4 die Ansicht der Arretierungsvorrichtung nach Herunterklappen der Armlehne und Auflaufen des Arretierungsschiebers gegen die zweite Anschlagkante, wodurch der Stellkolben entriegelt und die Rastfeder erneut auf ihn und den Rastvorsprung einwirken kann, bis er durch erneutes Anheben in Richtung auf die Rückenlehne die Gebrauchslage von Fig. 2 erreicht,
Fig. 5 die Schnittansicht des Gehäuses entlang der Linie V/V von Fig. 6,
Fig. 6 die Draufsicht in Richtung des Pfeiles VI von Fig. 5,
Fig. 7 die Stirnansicht des Gehäuses in Richtung des Pfeiles VII von Fig. 5,
Fig. 8 die Schnittansicht durch das als Scheibe ausgebildete Ende der Armlehne in Richtung der Pfeile VIII/VIII von Fig. 9,
Fig. 9 die Ansicht der Scheibe in Richtung des Pfeiles IX von Fig. 8,
Fig. 10 die Schnittansicht der Scheibe in Richtung der Pfeile X/X von Fig. 8,
Fig. 11 die Schnittansicht des Stellkolbens entlang der Linie XI/XI von Fig. 12 und 13,
Fig. 12 die Unteransicht des Stellkolbens in Richtung des Pfeiles XII von Fig. 11,
Fig. 13 die Seitenansicht des Stellkolbens in Richtung des Pfeiles XIII von Fig. 11,
Fig. 14 die Seitenansicht einer Rolle als Rastvorsprung,
Fig. 15 die Schnittansicht der Rolle in Richtung der Pfeile XV/XV von Fig. 14,
Fig. 16 die Seitenansicht des Arretierungsschiebers,
Fig. 17 die Unteransicht des Arretierungsschiebers in Richtung des Pfeiles XVII von Fig. 16,
Fig. 18 die Seitenansicht des Arretierungsschiebers in Richtung des Pfeiles XVIII von Fig. 16,
Fig. 19 eine der Fig. 2 entsprechende Ausführung, jedoch mit einem formschlüssig in eine Rastausnehmung eingreifenden Rastvorsprung ohne Überlastungsschutz und
Fig. 20 eine kinematische Umkehrung der Ausführungsform der Figuren 2 bis 4, bei welcher im Gegensatz dazu der Stellkolben und die Rastfeder in einer Ausnehmung des Gehäuses angeordnet sind, der Rastvorsprung in einen Rastrücksprung in der Scheibe der Armlehne eingreift, die Anschlagkanten an der Scheibe angebracht und der Arretierungsschieber mit kreissegmentartigen Gleitflächen auf einer Teilkreisbahn des Gehäuses gleitet.

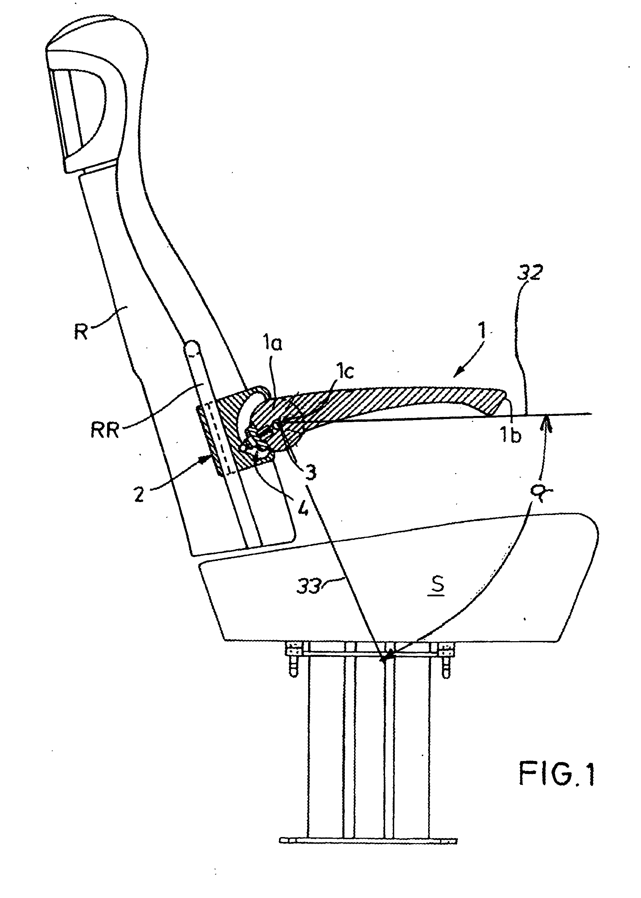

In Fig. 1 ist schematisch ein Sitz S mit Rückenlehne R dargestellt, an dessen Rahmenrohr RR eine Armlehne 1 für den rechten Arm eines Menschen gehaltert ist. Diese Armlehne 1 ist mit ihrem einen Ende 1a als Scheibe ausgebildet, die an einem Lagerzapfen 3 in einem Gehäuse 2 schwenkbeweglich gelagert ist. Durch Anheben des anderen Endes 1b der Armlehne im Gegenuhrzeigersinn in Richtung auf die Rückenlehne R wird die pauschal mit 4 bezeichnete Arretierungsvorrichtung derart gelöst, daß das Ende 1b der Armlehne 1 anschließend im Uhrzeigersinn in Richtung auf den Sitz S heruntergeschwenkt werden kann, um somit der betreffenden Person ein seitliches Herausrücken vom Sitz S auf beispielsweise einen angrenzenden Gang zu ermöglichen. Aus dieser in Richtung auf den Sitz S heruntergeschwenkten Stellung des Endes 1b wird die Armlehne 1 durch erneutes Anheben im Gegenuhrzeigersinn in Richtung auf die Rückenlehne R um einen bestimmten Schwenkwinkel α zwischen zwei Schenkeln 32, 33 erneut in die aus Fig. 1 ersichtliche arretierte Gebrauchslage verschwenkt

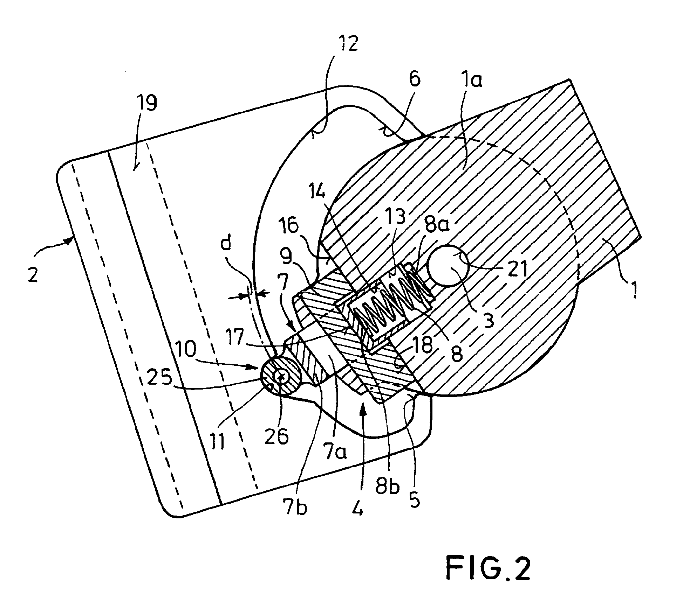

Bei einer ersten Ausführungsform gemäß den Figuren 2 bis 4 besteht die Arretierungsvorrichtung 4 aus einem etwa radial zum Lagerzapfen 3 beweglichen sowie unter Wirkung einer Rastfeder 8 bestehenden Stellkolben 7 mit einer Queröffnung 7a und einem darin verschieblichen Arretierungsschieber 9.

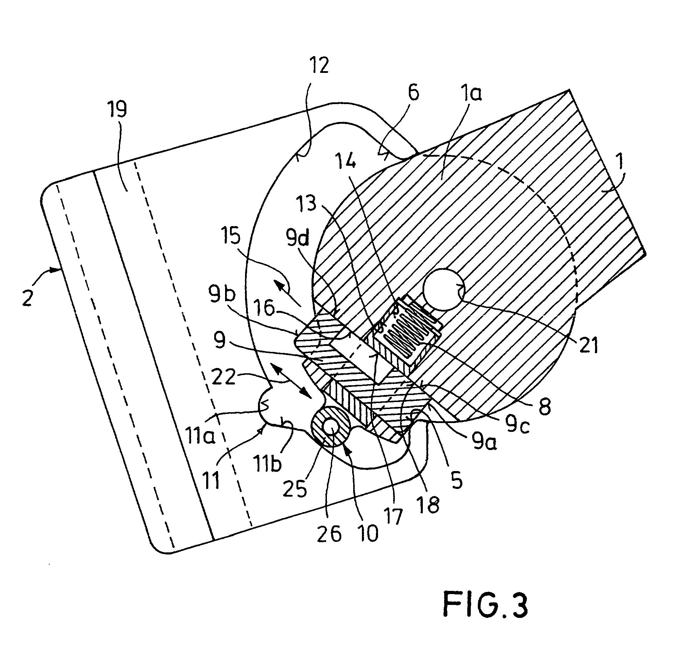

An seinem von der Rastfeder 8 abgewandten Ende 7b ist der Stellkolben 7 mit einem Rastvorsprung 10 versehen, der im dargestellten Fall als Rolle 25 ausgebildet ist. Diese Rolle 25 greift unter Wirkung der Rastfeder 8 in einen Rastrücksprung 11 ein. Dieser Rastrücksprung 11 wird gemäß den Figuren 3, 4 und 5 von einem Kreisabschnitt 11a und einer sich in Richtung auf die untere Anschlagkante 5 hin gerichteten, schieben Auslaufebene 11b gebildet. Diese Auslaufebene 11b dient zum erleichterten Ausrücken des Rastvorsprunges 7b auf seine in Fig. 2 in seine in Fig. 3 dargestellte Lage.

Die Lage von Fig. 3 wird durch Anheben des Endes 1b der Armlehne 1 erreicht, wodurch diese im Gegenuhrzeigersinn um den Lagerzapfen 3 geschwenkt wird. Bei dieser Verschwenkung rückt der Rastvorsprung 10, hier die Rolle 25, des Stellkolbens 7 aus dem halbkreisförmigen Rücksprung 11a aus und gelangt über die schiefe Auflaufebene 11b auf eine Kreisbahn 12 im Gehäuse 2. Bei diesem Ausrücken wird der Stellkolben 7 tiefer in eine Ausnehmung 13 in der Scheibe 1a hineingedrückt und dadurch die Rastfeder 8 stärker komprimiert. Diese Rastfeder 8 stützt sich mit ihrem einen Ende 8a am Sacklochboden 13b dieser Ausnehmung 13 und mit ihrem anderen Ende 8b am Boden eines Rücksprunges 14 innerhalb des Stellkolbens 7 ab.

In der in Fig. 3 dargestellten Lage stößt der Arretierungsschieber 9 mit seiner Stirnseite 9a gegen die Anschlagkante 5, wodurch er innerhalb der Queröffnung 7a im Stellkolben 7 in Richtung des Pfeiles 15 verschoben wird. Da beim Auflaufen der Rastrolle 25 auf die Kreisbahn 12 innerhalb des Gehäuses 2 die Gleitfläche 17 in der Queröffnung 7a des Stellkolbens 7 in dieselbe Ebene der Gleitflächen 16 und 18 in der Durchgangsöffnung 24 in der Scheibe 1a heruntergedrückt ist, kann der Arretierungsschieber 9 problemlos von der ersten Anschlagkante 5 in die in Fig. 3 dargestellte Lage verschoben werden.

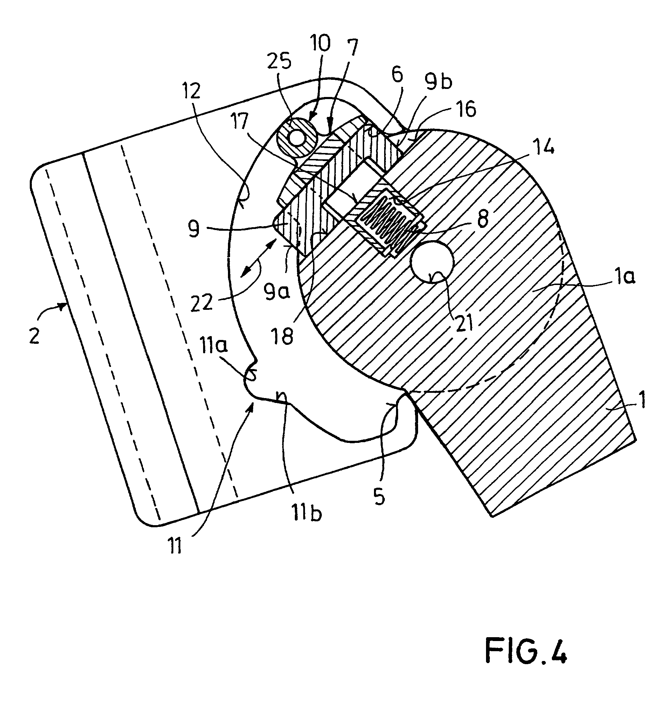

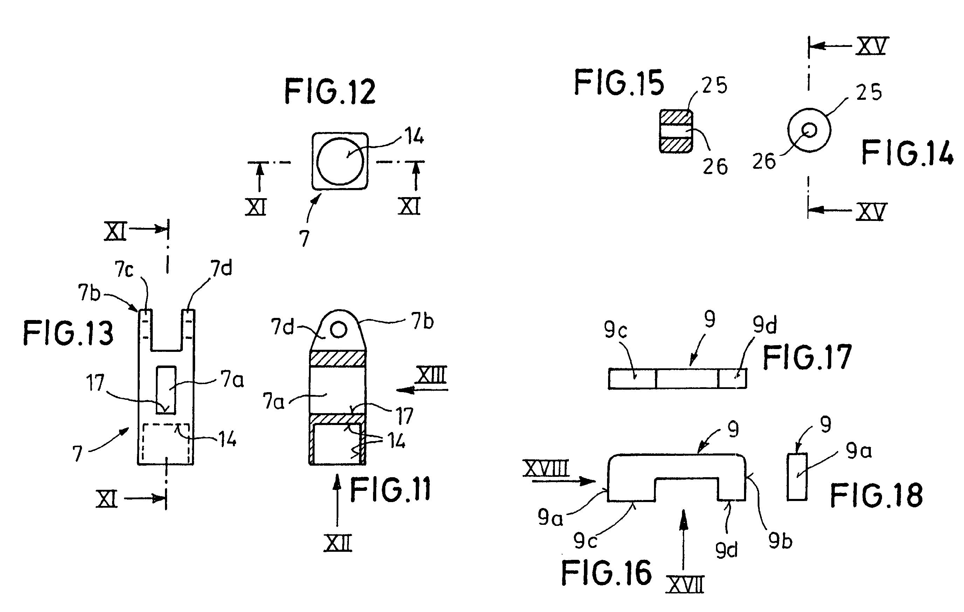

Dieser Arretierungsschieber 9, der im Detail in den Figuren 16 bis 18 dargestellt ist, besteht in der Ansicht der Fig. 16 aus einem U-förmigen, ansonsten quaderförmigen Schieber, dessen U-Schenkel 9c, 9d eine unterschiedliche Breite aufweisen. Aufgrund dieser unterschiedlichen Breite ragt der U-Schenkel 9c gemäß Fig. 3 mit einem Teil seiner Breite in die Queröffnung 7a des Stellkolbens 7 hinein, so daß er in Richtung seiner Bewegungsbahn gemäß dem Doppelpfeil 22 gesperrt ist. Dadurch kann die Armlehne 1 gemäß Fig. 1 mit ihrem Ende 1b problemlos in Richtung auf den Sitz S im Uhrzeigersinn heruntergeschwenkt werden, weil sich nunmehr die Rastrolle 25 auf der Kreisbahn 12 des Gehäuses 2 bewegt und nicht in den Rastrücksprung 11a einrücken kann. Dadurch kann die Armlehne 1 gemäß Fig. 4 mit ihrem Ende 1b von Fig. 1 im Uhrzeigersinn in Richtung auf den Sitz S heruntergeschwenkt werden.

Nach diesem Herunterschwenken nimmt die Arretierungsvorrichtung 4 die in Fig. 4 dargestellte Lage ein. Dabei läuft der Arretierungsschieber 9 mit seiner anderen Stirnseite 9b gegen die zweite Anschlagkante 6 und wird von dieser in die in Fig. 4 dargestellte Lage innerhalb der Queröffnung 7a des Stellkolbens 7 verschoben. Durch diese Verschiebung wird der Stellkolben 7 vom Arretierungsschieber 9 entsperrt und die Rastfeder 8 wieder zur Einwirkung auf den Stellkolben 7 und damit auf die Rastrolle 25 freigegeben. Anschließend wird die Armlehne 1 mit ihrem Ende 1b im Gegenuhrzeigersinn aus der in Fig. 4 dargestellten Lage in Richtung auf die Rückenlehne R hochgeschwenkt. Dabei gleitet die Rastrolle 25 auf der Kreisbahn 12 innerhalb des Gehäuses 2 nach unten, bis sie in den Teil 11a des Rastrücksprunges 11 gemäß Fig. 2 in ihre Gebrauchslage einrastet.

In dieser Gebrauchslage gemäß Fig. 2 ist die Rastfeder 8 mit einer derartigen Vorspannung beaufschlagt, daß die Armlehne 1 bei normal vorausgesetztem Gebrauch gemäß Fig. 1 in dieser Position gehalten ist. Wird sie hingegen durch nicht bestimmungsgemäßem Gebrauch über eine bestimmte Vorspannkraft hinaus belastet, wird die Rastrolle 25 als Rastvorsprung 10 unter Komprimierung der Rastfeder 8 aus dem Rastrücksprung 11a herausgedrückt wird und die Armlehne 1 mit ihrem Ende 1b im Uhrzeigersinn nach unten gedrückt. In diesem Fall wirkt die Arretierungsvorrichtung 4 als Überlastungsschutz, wodurch Beschädigungen der Armlehne 1 und des Gehäuses 2 unterbunden werden.

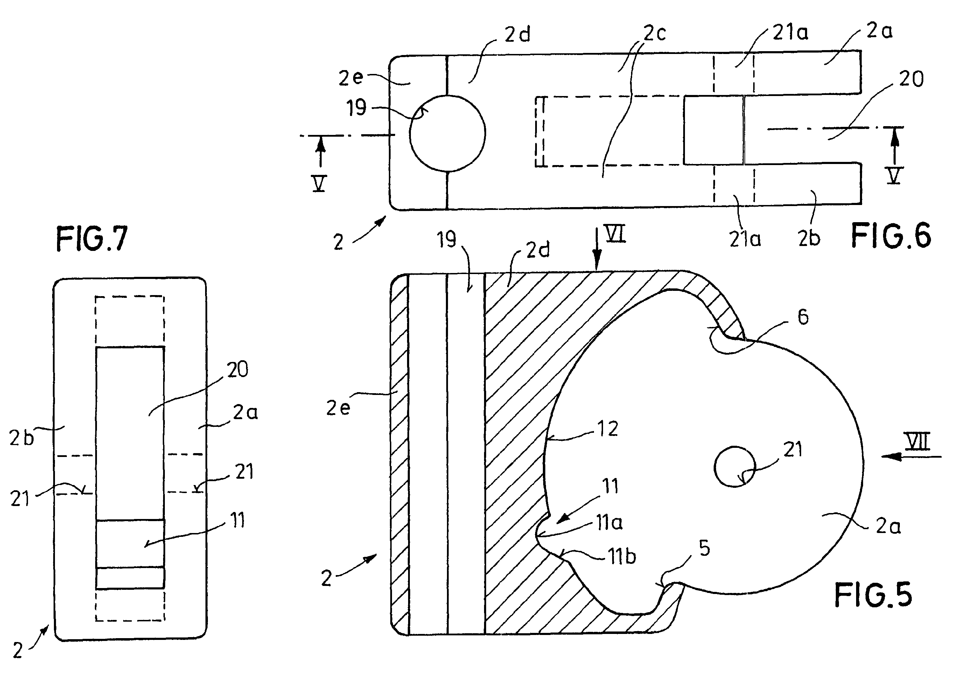

Das Gehäuse 2, welches das als Scheibe ausgebildete Ende 1a der Armlehne 1 aufnimmt, weist gemäß den Figuren 5 bis 7 einen die Scheibe 1a beidseitig gabelförmig mit Gehäusewangen 2a, 2b umgreifenden Gehäusekörper 2c auf, der an seinem geschlossenen sowie geteilten Stegende 2d, 2e von der Rahmenstange RR gemäß Fig. 1 der Rückenlehne R gehalten ist. Das geteilte Stegende 2d, 2e gemäß Fig. 6 wird durch nicht dargestellte Schrauben unter Klemmung des Rahmenrohres RR in der kreisrunden Durchgangsöffnung 19 zusammengehalten.

Der Lagerzapfen 3 von Fig. 1 wird in den beiden kreisrunden Öffnungen 21a der beiden Gehäusewangen 2a, 2b gehaltert. In den Zwischenraum 20 zwischen den beiden Gehäusewangen 2a, 2b ist die Scheibe 1a der Armlehne 1 eingefügt und kann mit ihrer Arretierungsvorrichtung 4 zwischen den beiden Anschlagkanten 5, 6 um den Winkel α zwischen den Winkelschenkeln 32, 33 verschwenkt werden.

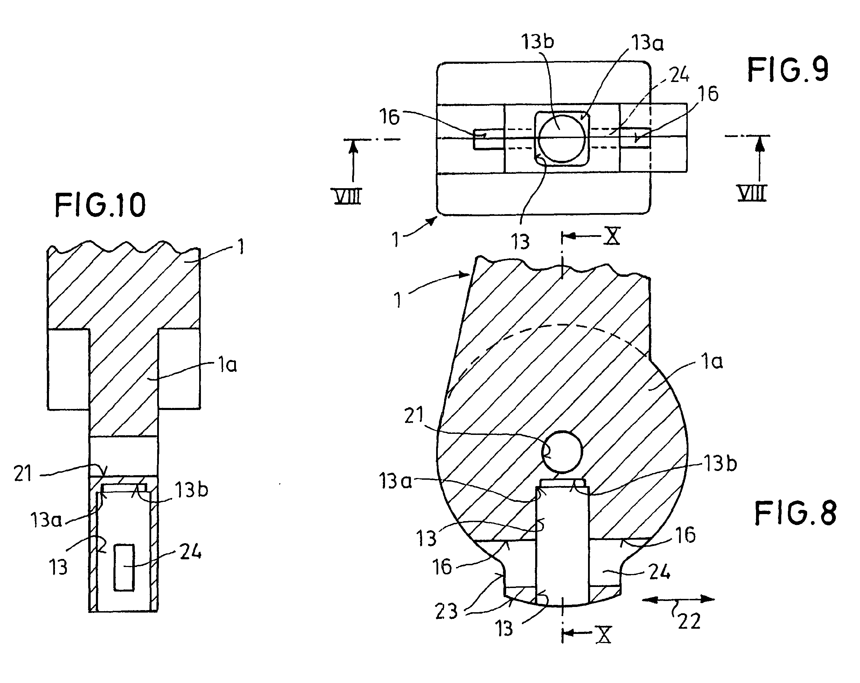

Die Scheibe 1a der Armlehne 1 ist in den Figuren 9 und 10 dargestellt. Sie wird an ihrer Durchgangsöffnung 21 zwischen den beiden Seitenwangen 2a, 2b des Gehäusekörpers 2c gemäß Fig. 6 von dem Lagerzapfen 3 gemäß Fig. 1 gehalten und ist um diesen Lagerzapfen 3 sowohl im Gegenuhrzeigersinn als auch im Uhrzeigersinn verschwenkbar.

Die Scheibe 1a weist eine zur Öffnung 21 radial verlaufende Zylinderausnehmung 13 mit quadratischem oder rechteckigem Querschnitt auf, in welcher der Stellkolben 7 mit entsprechender quadratischer oder rechteckiger Außenquerschnittsform verschieblich ist. Außerdem ist die Scheibe 1a mit einem über ihren Außenumfang vorspringenden Bereich 23 versehen, in welchem sich eine quer zur Ausnehmung 13 verlaufende Durchgangsöffnung 24 für den Arretierungsschieber 9 befindet, der in beiden Richtungen des Doppelpfeiles 22 darin verschieblich ist.

Wie aus Fig. 9 entnommen werden kann, ist der Boden 13a mit quadratischen Ausnehmung 13 mit einem kreisrunden kurzen Sackloch 13b zur rutschfesten und sicheren Aufnahme des Endes 8a der als zylindrische Schraubenfeder ausgebildeten Rastfeder 8 versehen.

Wie aus Fig. 10 in Verbindung mit Fig. 6 hervorgeht, wird die Scheibe 1a zwischen den Seitenwangen 2a, 2b des Gehäuses 2 paßgenau eingefügt, wobei der sich daran anschließende Teil der Armlehne 1 die gleiche Breite wie das Gehäuse 2 aufweist. Dadurch wird ein kontinuierlicher Übergang zwischen Gehäuse 2 und Armlehne 1 sichergestellt.

In den Figuren 11 bis 13 ist der Stellkolben 7 in drei Ansichten dargestellt:

Wie aus der Fig. 11 in Verbindung mit Fig. 12 entnommen werden kann, wird der Rücksprung 14 für die Aufnahme der Rastfeder 8 kreisringförmig ausgebildet, so daß eine sichere, knickfreie Führung der Rastfeder 8 sichergestellt ist.

An seinem Ende 7b ist der Stellkolben 7 mit zwei gabelförmigen Schenkeln 7c, 7d versehen, zwischen denen als Rastvorsprung 10 die in den Figuren 14 und 15 dargestellte Rastrolle 25 mittels eines nicht dargestellten Lagerstiftes drehbar gehalten ist. Dadurch ist ein reibungsarmer Eingriff dieser Rolle 25 mit der Kreisbahn 12 und dem Rastrücksprung 11 im Gehäuse 2 gewährleistet.

Wie aus Fig. 2 entnommen werden kann, befindet sich der Mittelpunkt 26 der Drehachse der Rastrolle 25 auf einer Kreisbahn, die um einen geringfügigen Abstand d größer ist als die Kreisbahn 12 innerhalb des Gehäuses 2. Dadurch wird die Rastrolle 25 und damit der Stellkolben 7 und somit auch die Scheibe 1a mit der Armlehne 1 sicher in dem teilkreisförmigen Rastrücksprungteil 11a gehalten und kann daraus ohne zusätzliche Vorspannung der Rastfeder 8 zur Überwindung des Totpunktes nicht zu einer Schwenkbewegung der Armlehne 1 im Uhrzeigersinn ausrücken. Ein Ausrücken ohne Überwindung dieses Totpunktes ist für die Rastrolle 25 nur bei einer Schwenkbewegung der Armlehne 1 im Gegenuhrzeigersinn auf der schiefen Ebene 11b möglich, so, wie es zu Fig. 3 beschrieben worden ist. Auf diese Weise gewährleistet die Rastrolle 25 in Kombination mit dieser Totpunktüberwindung und einer zusätzlichen Vorspannung der Rastfeder 8 den mehrfach beschriebenen Überlastungsschutz der Armlehne 1 bei einem nicht bestimmungsgemäßen Gebrauch.

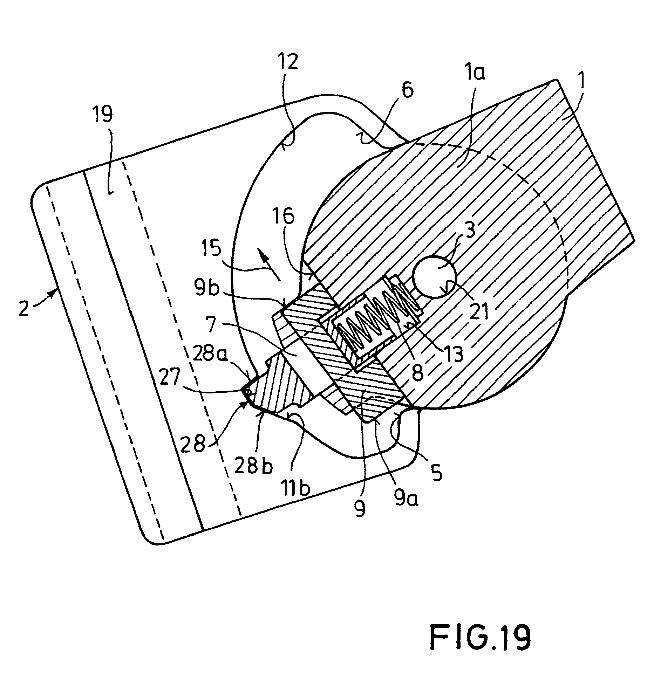

Falls ein derartiger Überlastungsschutz nicht gewünscht wird, bietet sich die Ausführungsform der Fig. 19 an. In diesem Fall ist der Rastvorsprung 10 als starrer, formschlüssig in einen entsprechend formschlüssig ausgebildeten Rastrücksprung 27 eingreifender Rastnocken 28 ausgebildet, dessen Rastnase 28a etwa senkrecht zur Kreisbahn 12 innerhalb des Gehäuses 2 verläuft. Dieser Rastnocken 28 kann mit seiner Gleitebene 28b nur auf der schiefen Ebene 11b bei einer Verschwenkung der Armlehne 1 im Gegenuhrzeigersinn aus seiner Verriegelung ausgerückt werden. Sobald dann die Stirnkante 9a des Arretierungsschiebers 9 gegen die erste Anschlagkante 5 des Gehäuses 2 fährt, wird der Arretierungsschieber 9 in Richtung des Pfeiles 15 - wie zu Fig. 3 beschrieben - verschoben, wodurch der Stellkolben 7 entgegen der Kraft der noch stärker vorgespannten Rastfeder 8 vom Arretierungsschieber 9 festgesetzt wird. In dieser arretierenden Feststellung befindet sich die Armlehne 1 in ihrer Loslage und kann im Uhrzeigersinn heruntergeschwenkt werden. Erst beim Anschlagen der anderen Stirnfläche 9b des Arretierungsschiebers 9 gegen die zweite Anschlagkante 6 wird die Arretierung der Rastfeder 8 und des Stellkolbens 7 in der zu Fig. 4 beschriebenen Weise wieder aufgehoben. Ansonsten sind übereinstimmende Teile mit identischen Bezugsziffern bezeichnet.

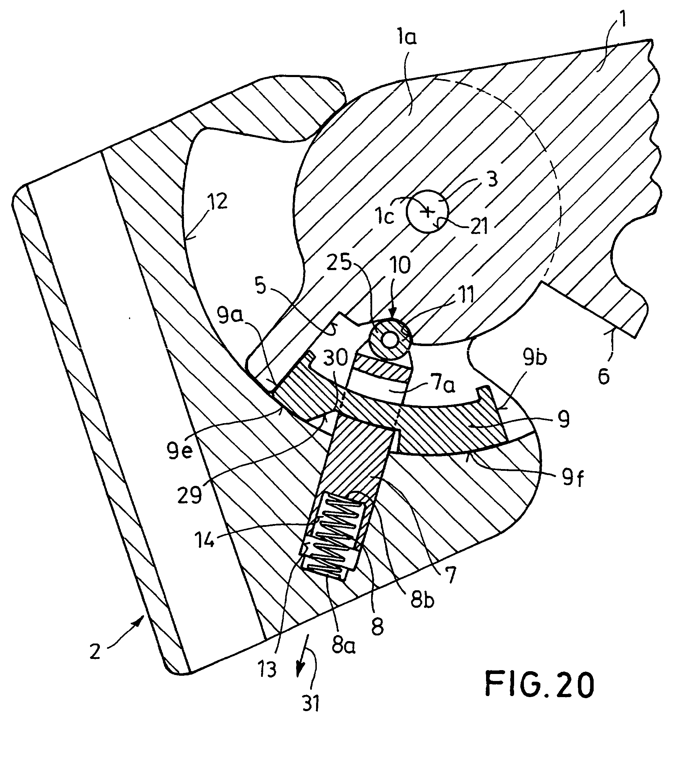

In Fig. 20 ist eine weitere Ausführung der Armlehne 1 in Form einer kinematischen Umkehrung Ausführungsform der Figuren 2 bis 4 dargestellt. Bei dieser Ausführung stützt sich die Rastfeder 8 mit ihrem einen Ende 8a auf dem Boden einer Ausnehmung 13 ab, die sich im Gehäuse 2 befindet. Mit ihrem anderen Ende 8b stützt sie sich am Boden eines Sackloches der Ausnehmung 14 im Stellkolben 7 ab. Die Ausnehmung 13 im Gehäuse 2 ist im Querschnitt wie die Ausnehmung 13 der Ausführungsform der Figuren 2 bis 4 rechteckig oder quadratisch ausgebildet und ebenso die Querschnittsaußenform des Stellkolbens 7. Dieser Stellkolben 7 ist nunmehr innerhalb dieser Ausnehmung 13 des Gehäuses verschiebbar und greift mit seinem als Rastrolle 25 ausgebildeten Rastvorsprung 10 in einen Rastrücksprung 11 der Scheibe 1a ein. Der Arretierungsschieber 9 ist mit kreissegmentartigen Gleitflächen 9e, 9f auf der Kreisbahn 12 im Gehäuse 2 verschiebbar. Wird bei diesem Ausführungsbeispiel die Armlehne 1 an ihrem Ende 1b im Gegenuhrzeigersinn angehoben, fährt die erste, nunmehr an der Scheibe 1a angeordnete Anschlagkante 5 gegen die Stirnkante 9a des Arretierungsschiebers 9, der mit seiner Gleitkante 29 die auflaufende Kante 30 des Stellkolbens 7 in Richtung des Pfeiles 31 entgegen der Wirkung der Rastfeder 8 herunterdrückt, bis die kreissegmentartige Gleitfläche 9e in die Queröffnung 7a des Stellkolbens 7 eingreift. In dieser Lage wird der Stellkolben 7 arretiert, bis die zweite Anschlagkante 6 bei einer Verschwenkung der Armlehne 1 im Uhrzeigersinn den Arretierungsschieber 9 beim Auftreffen seiner Stirnseite 9b aus der Queröffnung 7a des Stellkolbens 7 herausschiebt. Hiernach kann die Rastrolle 25 unter Wirkung der Rastfeder 8 erneut in den Rastrücksprung 11 der Scheibe 1a eingreifen.

Die beiden Schenkel 32, 33 des Schwenkwinkels α gemäß Fig. 1 werden beim Ausführungsbeispiel der Fig. 20 von den beiden Anschlagkanten 5, 6 in bezug auf den Drehpunkt 1c der Scheibe 1a gebildet.

### Bezugszeichenliste:

- Armlehne: 1
- Enden der Armlehne 1: 1a, 1b
- Drehpunkt der Scheibe 1a: 1c
- Gehäuse: 2
- Seitenwände des Gehäuses 2: 2a, 2b
- Gehäusekörper: 2c
- Stegende: 2d, 2e
- Lagerzapfen: 3
- Arretierungsvorrichtung: 4
- Anschlagkanten: 5, 6
- Stellkolben: 7
- Queröffnung im Stellkolben 7: 7a
- Ende des Stellkolbens 7: 7b
- Schenkel des Stellkolbens 7: 7c, 7d
- Rastfeder: 8
- Enden der Rastfeder 8: 8a, 8b
- Arretierungsschieber: 9
- Stirnseiten des Arretierungsschiebers 9: 9a, 9b
- U-Schenkel: 9c, 9d
- kreissegmentförmige Gleitflächen des Arretierungsschiebers 9: 9e, 9f
- Rastvorsprung des Stellkolbens 7: 10
- Rastrücksprung: 11
- Kreisabschnitt: 11a
- schiefe Auflaufebene: 11b
- Kreisbahn: 12
- Ausnehmung: 13
- Boden der Ausnehmung 13: 13a
- Sackloch: 13b
- Rücksprung: 14
- Pfeile: 15, 31
- Gleitflächen in Durchgangsöffnung 24 der Scheibe 1a: 16, 18
- Durchgangsöffnungen im Stegende 2d, 2e: 19
- Zwischenraum zwischen den Gehäusewangen 2a, 2b: 20
- Öffnung für Lagerzapfen 3 in der Scheibe 1a: 21
- Öffnung für den Lagerzapfen 3 in Seitenwangen 2a, 2b: 21a
- Doppelpfeil: 22
- vorspringender Bereich der Scheibe 1a: 23
- Duchgangsöffnung in der Scheibe 1a: 24
- Rastrolle: 25
- Mittelpunkt der Drehachse der Rastrolle 25: 26
- Rastrücksprung: 27
- Rastnocken: 28
- Rastnase: 28a
- schiefe Gleitebene des Rastnockens 28: 28b
- Gleitkante des Arretierungsschiebers 9: 29
- Kante des Stellkolbens 7: 30
- Schenkel des Winkels α: 32, 33
- Schwenkwinkel: α
- Sitz: S
- Rückenlehne: R
- Rahmenstange: RR
- Abstand: d

## Patentansprüche

1. Armlehne für einen Fahrzeugsitz (S), die mit ihrem einen als Scheibe (1a) ausgebildeten Ende um einen in einem Gehäuse (2) angeordneten Lagerzapfen (3) nach Lösen einer Arretierungsvorrichtung (4) durch Anheben ihres anderen Endes (1b) in Richtung auf die Rückenlehne (R), mit dem anderen Ende (1b) dann in Richtung auf die Sitzfläche in eine Loslage herunter und von dort durch erneutes Anheben in Richtung auf die Rückenlehne (R) des Fahrzeugsitzes (S) um einen bestimmten Schwenkwinkel (α) zwischen zwei Anschlagkanten (5, 6) in eine arretierte Gebrauchslage verschwenkbar ist, **gekennzeichnet durch** folgende Merkmale:
a) die Arretierungsvorrichtung (4) besteht aus einem etwa radial zum Lagerzapfen (3) in einer Zylinderöffnung (13) beweglichen sowie unter Wirkung einer Rastfeder (8) stehenden Stellkolben (7) mit einer Queröffnung (7a) und einem darin verschieblichen Arretierungsschieber (9),
b) der Stellkolben (7) ist an seinem von der Rastfeder (8) abgewandten Ende (7b) mit einem Rastvorsprung (10) versehen und greift unter Wirkung der Rastfeder (8) mit diesem in einen Rastrücksprung (11) ein,
c) der Arretierungsschieber (9) ist in der Queröffnung (7a) des Stellkolbens (7) zwischen den beiden Anschlagkanten (5, 6) des Schwenkwinkels (α) von der ersten Anschlagkante (5) in eine den Stellkolben (7) entgegen der Wirkung der dann noch weiter vorgespannten Rastfeder (8) in eine arretierende Feststellung zur Loslage der Armlehne (1) und
d) von der zweiten Anschlagkante (6) in die den Stellkolben (7) zur Einwirkung der Rastfeder (8) freigebende, zur Arretierung der Armlehne (1) führende Gebrauchslage verschiebbar.

2. Armlehne nach Anspruch 1, **dadurch gekennzeichnet, daß** der Stellkolben (7) eine quadratische oder rechteckige Außenquerschnittsform aufweist, an seinem der Feder (8) zugekehrten Ende mit einem Rücksprung (14) zu ihrer Aufnahme und an seinem entgegengesetzten Ende (7b) entweder zwischen zwei gabelförmigen Schenkeln (7c, 7d) mit einer drehbaren, in einen kreisabschnittsförmigen Rastrücksprung (11a) eingreifenden Rastrolle (25) oder mit einem starren, formschlüssig in einen entsprechend formschlüssig ausgebildeten Rastrücksprung (27) eingreifenden Rastnocken (28) versehen ist.

3. Armlehne nach Anspruch 1 oder 2, **dadurch gekennzeichnet, daß** der Arretierungsschieber (9) aus einem in der Ansicht U-förmigen, ansonsten quaderförmigen Schieber besteht, dessen U-Schenkel (9c, 9d) eine unterschiedliche Breite aufweisen.

4. Armlehne nach einem der Ansprüche 1 bis 3, **dadurch gekennzeichnet, daß** die Stirnflächen der beiden Schenkel (9c, 9d) des Arretierungsschiebers (9) Gleitflächen bilden, mit denen sie auf einer Gegengleitfläche (16) von den beiden Anschlagkanten (5, 6) verschiebbar sind.

5. Armlehne nach einem oder mehreren der Ansprüche 1 bis 4, **dadurch gekennzeichnet, daß** das Gehäuse (2), welches das als Scheibe (1a) ausgebildete Ende der Armlehne (1) und den Lagerzapfen (3) aufnimmt, zwei die Scheibe (1a) in einem Gehäusekörper(2c) beidseitig gabelförmig umgreifende Gehäusewangen (2a, 2b) aufweist und an seinem geschlossenen Stegende (2d, 2e) in einer Durchgangsöffnung (19) von einer Rahmenstange (RR) der Rückenlehne (R) gehalten ist.

6. Armlehne nach einem der Ansprüche 1 bis 5, **dadurch gekennzeichnet, daß** sich die Rastfeder (8) mit ihrem einen Ende (8a) in einer Ausnehmung (13) des als Scheibe (1a) ausgebildeten Endes der Armlehne (1) und mit ihrem anderen Ende (8b) in dem Rücksprung (14) des Stellkolbens (7) abstützt, der innerhalb derselben Ausnehmung (13) in der Scheibe (1a) verschiebbar und mit seinem Rastvorsprung (7b) in einen Rastrücksprung (11) des Gehäuses (2) eingreift, wobei die erste und zweite Anschlagkante (5, 6) für den Arretierungsschieber (9) an den Enden einer Teilkreisbahn (12) innerhalb des Gehäuses (2) und die Gleitflächen (16) für den Arretierungsschieber (9) in einer quer zur Ausnehmung (13) verlaufenden Durchgangsöffnung (24) in der Scheibe (1a) der Armlehne (1) angeordnet sind.

7. Armlehne nach einem oder mehreren der Ansprüche 1 bis 5, **dadurch gekennzeichnet, daß** sich die Rastfeder (8) mit ihrem einen Ende (8a) in einer Ausnehmung (13) im Gehäuse (2) und mit ihrem anderen Ende (8b) in dem Rücksprung (14) am rückwärtigen Ende des Stellkolbens (7) abstützt, der innerhalb derselben Ausnehmung (13) im Gehäuse (2) verschiebbar und mit seinem Rastvorsprung (10) in einen Rastrücksprung (11) der Scheibe (1a) eingreift, wobei der Arretierungsschieber (9) mit kreissegmentförmigen Gleitflächen (9e, 9f) auf einer Kreisbahn (12) des Gehäuses (2) verschiebbar ist und die erste und zweite Anschlagkante (5, 6) als Vorsprünge an der Scheibe (1a) der Armlehne (1) angeordnet sind.

8. Armlehne nach einem der Ansprüche 1 bis 7, **dadurch gekennzeichnet, daß** der aus einer Rolle (25) bestehende Rastvorsprung (10) entweder aus einem entropieelastischen Rollenkörper besteht oder mit einem entropieelastischen, zylindrischen Mantel versehen ist oder aus Stahl besteht.

9. Armlehne nach einem oder mehreren der Ansprüche 1 bis 8, **dadurch gekennzeichnet, daß** die Rastfeder (8) bei eingerasteter Stellung des Rastvorsprunges (10) mit einer solchen Federkraft vorgespannt ist, welche die Armlehne (1) bei einer auf ihr freies Ende (1b) ausgeübten Druckkraft bis beispielsweise 5 kg in der Rastlage hält und daß erst bei Überschreiten dieser Druckkraft die Rastfeder (8) unter Wirkung des zurückgleitenden Stellkolbens (7) weiter zusammengepreßt ist, der Rastvorsprung (10) aus dem Rastrücksprung (11) in die Loslage der Armlehne (1) herausgedrückt und diese in Richtung auf den Sitz (S) verschwenkt ist.

10. Armlehne nach einem oder mehreren der Ansprüche 1 bis 9, **dadurch gekennzeichnet, daß** die Rastfeder (8) und der Lagerzapfen (3) aus Stahl, hingegen sämtliche anderen Teile (1, 2, 4, 5, 6, 7, 9) aus einem schlagfesten und formstabilen Kunststoff bestehen.

11. Armlehne nach Anspruch 10, **dadurch gekennzeichnet, daß** daß das Gehäuse (2), die Armlehne (1) und der Stellkolben (7) aus Polyamid 6 (PA6) mit Glasfaserverstärkung oder aus Polybutylenterephtalat (PBTP) und der Arretierungsschieber (9) aus Polyoxymethylen (POM) hergestellt sind.

## Claims

1. An armrest for a motor vehicle seat (S), which is capable of pivoting with its end designed as a disk (1a) about a bearing journal (3) arranged in a housing (2), after the release of a locking device (4) by raising its other end (1b) in the direction of the seatback (R), with the other end (1b) then downwards in the direction towards the seat surface, into a release position, and from there, by again raising in the direction of the seatback (R) of the vehicle seat (S), about a specific pivot angle (α) between two contact edges (5 6), into a locked position of use, **characterised by** the following features:
a) the locking device (4) consists of a setting piston (7), capable of being moved approximately radially to the bearing journal (3) in a cylindrical aperture (13), and under the effect of an engagement spring (8), with a transverse aperture (7a) and a locking slide (9) capable of displacement therein;
b) the setting piston (7) is provided with an engagement projection (10) at its end (7b) turned away from the engagement spring (8), and engages with this engagement projection in an engagement recess (11) under the effect of the engagement spring (8);
c) the locking slide (9) is capable of displacement in the transverse aperture (7a) of the setting piston (7), between the two contact edges (5, 6) of the pivot angle (a) of the first contact edge (5), into a locking position, for the release of the armrest (1), displacing the setting piston (7) against the effect of the engagement spring (8) which is then still further pre-tensioned, and;
d) the locking slide is capable of displacement by a second contact edge (6) into the position of use, releasing the setting piston (7) to take effect on the engagement spring (8), leading to the locking of the armrest (1).

2. The armrest according to Claim 1, **characterised in that** the setting piston (7) features a square or rectangular external cross-section form, and is provided at its end turned towards the spring (8) with a recess (14) to accommodate the spring, and at its end (7b) turned away from the spring, either between two fork-shaped limbs (7c, 7d), with a rotatable engagement roller (11a), engaging in an engagement recess (11a) in circular sectional form, or with a rigid engagement cam (28), engaging in positive fit in a projection (27), correspondingly positive-fit in design.

3. The armrest according to Claim 1 or 2, **characterised in that** the locking slide (9) consists of a slide which is U-shaped in front view, and otherwise cuboid in shape, the U-limbs (9c, 9d) of which feature differing widths.

4. The armrest according to Claim 1 or 3, **characterised in that** the face surfaces of the two limbs (9c, 9d) of the locking slide (9) form slide surfaces by means of which they are capable of displacement on a counter-slide surface (16) of the two contact edges (5, 6).

5. The armrest according to one of more of Claims 1 to 4, **characterised in that** the housing (2) which accommodates the end of the armrest (1) designed as a disk (1a) and the bearing journal (3), features two housing cheeks (2a, 2b) which encompass the disk (1a) in a housing body (2c) in fork fashion on both sides, and is held at its closed web end (2d, 2e) in a passage aperture (19) of a frame bar (RR) of the seatback (R).

6. The armrest according to one of more of Claims 1 to 5, **characterised in that** the engagement spring (8) is supported with one end (8a) in a cut-out (13) of the end of the armrest (1) designed as a disk (1a), and with its other end supported in the recess (14) of the setting piston (7), which engages inside said cut-out (13) in the disk (1a) in a displaceable manner and with its engagement projection (7b) engaging in an engagement recess (11) of the housing (2), whereby the first and second contact edges (5, 6) for the locking slide (90 are arranged at the ends of a partly circular path (12) inside the housing (2) and the slide surfaces (16) for the locking slide (9) are arranged in a passage aperture (24) running transverse to the cut-out (13) in the disk (1a) of the armrest (1).

7. The armrest according to one of more of Claims 1 to 5, **characterised in that** the engagement spring (8) is supported with one end (8a) in a cut-out (13) in the housing (2) and with its other end (8b) in the recess (14) at the back end of the setting piston (7), which can be displaced inside said cut-out (13) in the housing (2) and engages with its engagement projection (10) in an engagement recess (11) of the disk (1a), whereby the locking slide (9) is capable of displacement with slide surfaces (9e, 9f) in circle segment form, on a circular path (12) of the housing (2), and the first and second contact edges (5, 6) are designed as projections at the disk (1a) of the armrest (1).

8. The armrest according to one of more of Claims 1 to 7, **characterised in that** the engagement projection (10) consisting of a roller (25) comprises either an entropy-elastic roller body or is provided with an entropy-elastic cylindrical sheath, or is made of steel.

9. The armrest according to one of more of Claims 1 to 8, **characterised in that** the engagement spring (8), in the engaged position of the engagement projection (10), is subjected to pre-tension with such a spring force, which will hold the armrest (1) in the position of rest under a pressure force exerted on its free end (1b) of up to 5 kg, for example, and that only when this pressure force is exceeded will the engagement spring (8), under the effect of the setting piston (7) sliding back, be further compressed, and will push the engagement projection (10) out of the engagement recess (11) into the release position of the armrest (1), and cause it to pivot in the direction of the seat (S).

10. The armrest according to one of more of Claims 1 to 9, **characterised in that** the engagement spring (8) and the bearing journal (3) are made of steel, while by contrast all the other parts (1, 2, 4, 5, 6, 7, 9) are made of impact-resistant and form-stable plastic.

11. The armrest according to Claim 10, **characterised in that** the housing (2), the armrest (1), and the setting piston (7) are made of polyamide 6 (PA6) with fibreglass reinforcement, or of polybutyl enterephthalate (PBTP) and the locking slide is made of polyoxymethylene (POM).

## Revendications

1. Accoudoir pour siège de véhicule (S) qui peut pivoter par son extrémité réalisée en forme de disque (1a) autour d'un tourillon (3) disposé dans un boîtier (2) après avoir défait un dispositif d'arrêt (4) en relevant son autre extrémité (1b) en direction du dossier (R), puis par son autre extrémité (1b) en direction de la surface du siège vers une position lâche et de là en le relevant de nouveau en direction du dossier (R) du siège de véhicule (S) suivant un certain angle de pivotement (α) entre deux bords de butée (5, 6) vers une position arrêtée d'utilisation, **caractérisé par** les caractéristiques suivantes :
a) le dispositif d'arrêt (4) est composé de deux pistons de réglage (7) mobiles approximativement radialement par rapport au tourillon (3) dans un orifice cylindrique (13) ainsi que d'un piston subissant sous l'effet d'un ressort d'encliquetage (8) et présentant un orifice transversal (7a) et une tirette d'arrêt (9) déplaçable dedans,
b) le piston de réglage (7) est pourvu à son extrémité détournée du ressort d'encliquetage (8) d'une saillie d'encliquetage (10) et s'engrène par celle-ci sous l'effet du ressort d'encliquetage (8) dans un retrait d'encliquetage (11),
c) la tirette d'arrêt (9) est déplaçable dans l'orifice transversal (7a) du piston de réglage (7) entre les deux bords de butée (5, 6) de l'angle de pivotement (α) du premier bord de butée (5) dans une position avec le piston de réglage (7) à l'encontre de l'effet du ressort d'encliquetage (8) encore davantage précontraint (8) vers une position fixe d'arrêt pour libérer l'accoudoir (1) et
d) du premier bord de butée (6) vers la position d'utilisation libérant le piston de réglage (7) pour faire agir le ressort d'encliquetage (8) et aboutissant à l'arrêt de l'accoudoir (1).

2. Accoudoir selon la revendication 1, **caractérisé en ce que** le piston de réglage (7) présente une forme de section transversale extérieure quadratique ou rectangulaire, est pourvu à son extrémité tournée vers le ressort (8) d'un retrait (14) destiné à le recevoir et à son extrémité opposée (7b) soit d'un rouleau d'encliquetage (25) rotatif s'engrenant par un retrait d'encliquetage (11a) en forme de segment de cercle entre deux branches en forme de fourches (7c, 7d), soit d'une came d'encliquetage (28) rigide s'engrenant par correspondance géométrique dans un retrait d'encliquetage (27) conformé avec une correspondance géométrique conséquente.

3. Accoudoir selon la revendication 1 ou 2, **caractérisé en ce que** la tirette d'arrêt (9) est composée d'une tirette ayant un aspect en forme de U mais autrement de forme quadrangulaire, dont les branches du U (9c, 9d) ont une largeur différente.

4. Accoudoir selon une des revendications 1 à 3, **caractérisé en ce que** les surfaces frontales des deux branches (9c, 9d) de la tirette d'arrêt (9) constituent des surfaces de glissement qui permettent de les déplacer sur une contre-surface de glissement (16) depuis les deux bords de butée (5, 6).

5. Accoudoir selon une ou plusieurs des revendications 1 à 4, **caractérisé en ce que** le boîtier (2) recevant l'extrémité réalisée sous forme de disque (1a) de l'accoudoir (1) et le tourillon (3) présente deux flasques de boîtier entourant le disque (1a) des deux côtés en forme de fourche dans un corps de boîtier (2c) et est maintenu à son extrémité de traverse fermée (2d, 2e) dans un orifice traversant (19) d'une barre de châssis (RR) du dossier (R).

6. Accoudoir selon une des revendications 1 à 5, **caractérisé en ce que** le ressort d'encliquetage (8) est déplaçable par une de ses extrémités (8a) dans un évidement (13) de l'extrémité réalisée sous forme de disque (1a) de l'accoudoir (1) et par son autre extrémité (8b) dans le retrait (14) du piston de réglage (7) qui est déplaçable dans le même évidement (13) du disque (1a) et s'engrène par sa saillie d'encliquetage (7b) dans un retrait d'encliquetage (11) du boîtier (2), tandis que le premier et le deuxième bord de butée (5, 6) pour la tirette d'arrêt (9) sont disposés aux extrémités d'une piste en segment de cercle (12) à l'intérieur du boîtier (2) et les surfaces de glissement (16) pour la tirette d'arrêt (9) sont disposées dans un orifice traversant (24) s'étendant transversalement à l'évidement (13) dans le disque (1a) de l'accoudoir (1).

7. Accoudoir selon une ou plusieurs des revendications 1 à 5, **caractérisé en ce que** le ressort d'encliquetage (8) s'appuie par une de ses extrémités (8a) dans un évidement (13) du boîtier (2) et par son autre extrémité (8b) dans le retrait (14) à l'extrémité arrière du piston de réglage (7) qui est déplaçable dans le même évidement (13) du boîtier (2) et s'engrène par sa saillie d'encliquetage (10) dans un retrait d'encliquetage (11) du disque (1a), tandis que la tirette d'arrêt (9) est déplaçable à l'aide de surfaces de glissement en forme de segments de cercle (9e, 9f) sur une piste circulaire (12) du boîtier (2) et que le premier et le deuxième bord de butée (5, 6) sont disposés sous forme de saillies (1a) sur le disque (1a) de l'accoudoir (1).

8. Accoudoir selon une des revendications 1 à 7, **caractérisé en ce que** la saillie d'encliquetage (10) consistant en un rouleau soit est composée d'un corps de rouleau à entropie élastique, soit est pourvue d'une chemise cylindrique à entropie élastique, soit est composée d'acier.

9. Accoudoir selon une ou plusieurs des revendications 1 à 8, **caractérisé en ce que** le ressort d'encliquetage (8), en position encliquetée de la saillie d'encliquetage (10), est précontraint avec une force de ressort telle qu'elle maintient l'accoudoir (1) en position d'encliquetage lorsqu'on exerce sur son extrémité libre (1b) une force de compression allant jusqu'à par exemple 5 kg et que c'est seulement en cas de dépassement de cette force de compression que le ressort d'encliquetage (8), sous l'effet du piston de réglage glissant en retour (7), est comprimé davantage, que la saillie d'encliquetage (10) est poussée hors du retrait d'encliquetage (11) vers la position lâche de l'accoudoir (1) et que ce dernier pivote en direction du siège (S).

10. Accoudoir selon une ou plusieurs des revendications 1 à 9, **caractérisé en ce que** le ressort d'encliquetage (8) et le tourillon (3) sont composés d'acier et que par contre toutes les autres pièces (1, 2, 4, 5, 6, 7, 9) sont composées d'une matière plastique résistant aux chocs et à forme stable.

11. Accoudoir selon la revendication 10, **caractérisé en ce que** le boîtier (2), l'accoudoir (1) et le piston de réglage (7) sont fabriqués en polyamide 6 (PA6) avec un renforcement aux fibres ou de téréphtalate de polybutylène (PBTP) et que la tirette d'arrêt (9) est en polyoxyméthylène (POM).
